# FASCICULE DE BREVET EUROPEEN

(11) **EP 1 950 003 B1**
(45) Date de publication et mention de la délivrance du brevet: **08.03.2017**
(21) Numéro de dépôt: 08100619.9
(22) Date de dépôt: 18.01.2008
(51) Int. Cl.: B29C 53/80, B23P 15/00, C22C 47/06, C22C 47/04

(54) **Pièce tubulaire comportant un insert en matière composite à matrice métallique**
Rohrteil mit einem Einsatz aus Metallmatrix-Verbundwerkstoff
Tubular part including an insert made of a metal matrix composite material

(30) Priorité: 23.01.2007 FR 0700451
(43) Date de publication de la demande: 30.07.2008
(73) Titulaire: Safran Aircraft Engines, 75015 Paris (FR)
(72) Inventeur: Franchet, Jean- Michel, 75018 Paris (FR); Klein, Gilles, 95540 Mery sur Oise (FR); Salvat, Louis, 38230 Tignieu Jameyzieu (FR)
(74) Mandataire: Gevers & Orès

(56) Documents cités:
- EP-A- 1 726 678
- EP-A1- 0 931 846
- US-A- 3 932 254
- US-A- 4 137 119
- US-A- 4 822 444
- US-A1- 2003 056 355
- US-A1- 2006 060 325

## Description

L'invention concerne la fabrication d'une pièce tubulaire comportant un insert en matière composite à matrice métallique selon les préambules des revendications 1 et 3.

Un tel procédé et un tel dispositif son connues du document US 2006/0060325 A1.

Dans le domaine de l'aéronautique, notamment, un objectif constant est l'optimisation de la résistance des pièces pour une masse et un encombrement minimaux. C'est ainsi que certaines pièces peuvent désormais comporter un insert en matériau composite à matrice métallique. Un tel matériau composite comporte une matrice d'alliage métallique, par exemple d'alliage de titane Ti, dans laquelle s'étendent des fibres, par exemple des fibres céramiques de carbure de silicium SiC. De telles fibres présentent une résistance en traction bien supérieure à celle du titane (typiquement, 4000 MPa contre 1000 MPa). Ce sont donc les fibres qui reprennent les efforts, la matrice d'alliage métallique assurant une fonction de liant avec le reste de la pièce, ainsi que de protection et d'isolation des fibres, qui ne doivent pas entrer en contact les unes avec les autres. En outre, les fibres céramiques sont résistantes à l'érosion, mais doivent nécessairement être renforcées par du métal.

Ces matériaux composites peuvent être utilisés dans la fabrication de disques, d'arbres, de corps de vérins, de carters, d'entretoises, comme renforts de pièces monolithiques telles des aubes, etc. Les dimensions-notamment l'épaisseur - et la masse de ces pièces peuvent être ainsi considérablement réduites. A titre d'exemple, un disque supportant des aubes peut être réduit à un simple anneau.

Afin d'obtenir un tel insert en matériau composite, on forme préalablement des fils dits "fils enduits", comprenant une fibre céramique enduite de métal. Le métal donne au fil l'élasticité et la souplesse nécessaires à sa manipulation. De préférence, un fil très fin de carbone ou de tungstène s'étend au centre de la fibre, le long de son axe, ce fil de carbone est enrobé de carbure de silicium, tandis qu'une fine couche de carbone est interposée entre la fibre et le métal, pour assurer une fonction de barrière de diffusion et de tampon lors de la relaxation thermique différentielle qui intervient au moment du refroidissement du métal liquide déposé sur la fibre.

La fabrication des fils de matériau composite, ou fils enduits, peut être effectuée de diverses manières, par exemple par dépôt de métal en phase vapeur sous un champ électrique, par électrophorèse à partir de poudre métallique ou encore par enduction de fibres céramiques au trempé dans un bain de métal liquide. Un tel procédé d'enduction de fibres céramiques, au trempé, dans un métal liquide, est présenté dans le brevet EP 0 931 846, au nom de la Demanderesse. La fabrication des fils selon ce procédé est rapide. On obtient ainsi des fils de matériau composite, ou fils enduits, qui servent de base à la fabrication de l'insert en matériau composite qui sera inclus dans la pièce.

L'invention s'applique plus particulièrement à la fabrication d'une pièce sensiblement tubulaire comportant un insert en matériau composite à matrice métallique; il s'agit, par exemple, d'un arbre de rotor de turbomachine. L'art antérieur propose différents procédés de formation d'une telle pièce.

Selon un premier procédé, des disques, formés chacun d'un fil enduit enroulé en une spirale qui est solidarisée par un agent de collage, sont empilés les uns sur les autres dans un container. L'agent de collage est alors supprimé pour éviter toute contamination du titane, puis le container est fermé et compacté de manière isostatique à chaud, pour obtenir une pièce avec un insert en matériau composite. Un tel procédé est long et complexe à mettre en oeuvre. Il est par ailleurs mal adapté à la formation d'une pièce tubulaire. En effet, il faut former puis empiler un grand nombre de disques pour obtenir la pièce. Par ailleurs, dans un arbre de rotor de turboréacteur, par exemple, la résultante des contraintes et des divers modes de sollicitation (centrifuge, traction, torsion, compression, ...) a au moins une composante longitudinale, car l'arbre travaille principalement en torsion. Or, les fibres céramiques reprennent les efforts tangentiellement à l'axe (curviligne) selon lequel elles s'étendent, autrement dit, les caractéristiques mécaniques des fils enduits sont grandes dans leur direction longitudinale. Or, enroulés en une spirale comme dans le procédé qui vient d'être décrit, les fils ne peuvent reprendre que des efforts transversaux.

Un autre procédé a été envisagé, qui propose d'enfiler, dans un fourreau, des fils enduits sous forme de baguettes, parallèles les uns aux autres, s'étendant longitudinalement entre deux tubes formant le fourreau, puis de soumettre le tout à une compaction isostatique à chaud. Si l'on souhaite que les fils s'étendent, non pas parallèlement à l'axe de l'arbre, mais selon un angle par rapport à lui, les fils sont rendus solidaires de disques placés de part et d'autre des fourreaux et ces disques sont tournés autour de leur axe, en sens inverse l'un par rapport à l'autre. Dans un procédé de ce type, la mise en place des fils enduits s'avère très fastidieuse, voire impossible pour les derniers fils si l'on souhaite une grande densité de fils enduits. Par ailleurs, le risque de mauvais positionnement des fils, qui engendre leur détérioration et un mauvais comportement de la pièce, est grand.

Pour pallier ces problèmes, la Demanderesse a proposé, dans la demande de brevet français déposée sous le numéro FR 05 51 406, un procédé comportant une étape de drapage, autour d'une pièce support métallique, d'une nappe liée de fils enduits. Un tel procédé permet de former des pièces tubulaires de manière industrielle, tout en choisissant l'angle que forment les fils enduits par rapport à l'axe de la pièce, grâce à l'angle selon lequel la nappe est drapée autour de la pièce support.

Un tel procédé peut encore être amélioré. En effet, une nappe de fils enduits présente une certaine rigidité qui peut, dans certains cas, être gênante pour son drapage. Par ailleurs, les fils étant liés entre eux, ils ne sont pas libres de suivre une trajectoire propre, mais sont influencés dans leur mouvement par les fils voisins.

L'invention vise à proposer un procédé de formation d'une pièce tubulaire avec un insert en matériau composite à matrice métallique, qui soit efficace et simple à mettre en place industriellement.

A cet effet, l'invention concerne un procédé de fabrication d'une pièce tubulaire selon la revendication 1.

Grâce à l'invention, une pièce tubulaire peut être formée, de manière industrielle. Les fils étant non solidaires les uns des autres et enroulés tous ensemble, ils s'enroulent et se placent individuellement autour de la pièce support, sans contraintes. Par ailleurs, puisque les fils sont enroulés selon une trajectoire hélicoïdale, les fibres s'étendent autour de la pièce support avec un angle par rapport à son axe, qu'il est aisé de régler pour que les fibres reprennent bien les efforts auxquelles la pièce sera soumise. Le procédé de l'invention permet par ailleurs de maîtriser le maintien des fils enduits bobinés sur le support en sortie de filière; en effet, puisque c'est la filière qui se déplace en translation autour du support, ce dernier restant fixe en translation mais étant entraîné en rotation, la tension des fils est maîtrisée et les fils déjà bobinés sont maintenus en "compression" sur le support, ce qui ne serait pas le cas si c'était le support qui était déplacé (car les fils seraient en traction en sortie de bobinage). Les fils sont ainsi bien juxtaposés les uns par rapport aux autres.

Le procédé de l'invention est particulièrement bien adapté au bobinage de fils enduits avec un alliage de titane; en effet, la température de fusion du titane étant de l'ordre de 1750°C, il n'est pas envisageable de combiner l'enduction des fils et leur enroulement sur un support et il faut préalablement enduire les fibres, les laisser sécher puis les enrouler sur le support; le procédé de l'invention permet la mise en place de telles fibres sur un support.

On note que, lorsqu'il est précisé que, dans le procédé, les fils du faisceau de fils sont fixés à proximité d'une extrémité de la pièce support, les fils peuvent être fixés, soit directement sur la pièce support, soit à une pièce fixe distincte de la pièce support, à proximité de l'extrémité de ce dernier.

Selon une forme de réalisation, la filière est également entraînée en rotation autour de l'axe de la pièce support.

L'invention concerne encore un dispositif de fabrication d'une pièce tubulaire selon la revendication 3.

Des mises en oeuvre préférés du dispositif sont décrits dans des revendications dépendantes.

Selon une forme de réalisation, le module de formation d'un faisceau de fils enduits comporte deux plaques, percées chacune d'une pluralité d'orifices.

Avantageusement dans ce cas, chaque orifice comporte un manchon de guidage des fils, agencé pour remplir une double fonction, de protection des fils et de participation à la mise sous tension des fils.

Avantageusement encore, les manchons sont en caoutchouc.

Selon une forme de réalisation, la filière est agencée pour être également entraînée en rotation autour de l'axe de la pièce support.

L'invention sera mieux comprise à la lecture de la description de la forme de réalisation préférée du procédé et du dispositif de l'invention, en référence aux dessins annexés, sur lesquels:
- la figure 1 est une vue en perspective schématique d'une partie de la forme de réalisation préférée du dispositif de l'invention, en cours d'enroulement d'un faisceau de fils enduits;
- la figure 2 est une vue de détail, en perspective schématique, d'un orifice de la figure 1 et
- la figure 3 représente une vue en coupe de la filière de la forme de réalisation préférée du dispositif de l'invention.

On décrit tout d'abord un dispositif 1 de mise en oeuvre du procédé de l'invention.

Le dispositif 1 comporte un dispositif 6 de maintien d'une pièce 7 de support de fils enduits, ci après dénommée pièce support 7. La pièce support 7 se présente ici sous la forme d'un arbre, d'axe A. Le dispositif de maintien 6 soutient la pièce support 7 par une première extrémité 7a. Ce dispositif de maintien 6 est ici agencé pour soutenir la pièce support 7 par son extrémité 7a, sans qu'un autre moyen de maintien soit nécessaire ; en particulier, la pièce support 7 n'est pas supportée au niveau de sa deuxième extrémité 7b. Conformément à une autre forme de réalisation, une contre-pointe est prévue pour le maintien de la pièce support 7 à son autre extrémité.

Dans la forme de réalisation décrite, le dispositif de maintien 6 de la pièce support 7 est un mandrin 6, du type mandrin de tour d'usinage. Le mandrin 6 est agencé pour entraîner la pièce support 7 en rotation sur son axe A.

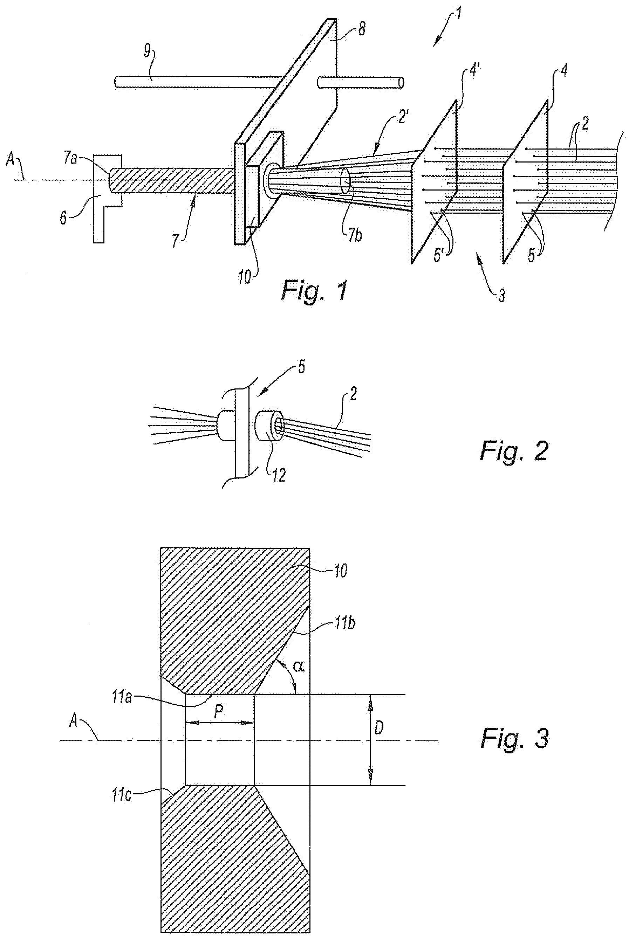

Le dispositif 1 comprend un module de bobines de fils enduits 2, non représenté, qui permet de dévider des fils enduits 2 vers un module de mise sous tension des fils enduits 2, non représenté. A partir du module de mise sous tension, les fils sont dévidés vers un module 3 de distribution des fils enduits comportant deux plaques 4, 4', percées chacune d'une pluralité d'orifices 5, 5', répartis circulairement sur la plaque 4, 4'. Les plaques 4, 4' sont agencées de telle sorte que les orifices 5, 5' de l'une soient en face des orifices 5', 5 de l'autre. Les orifices 5, 5' sont destinés à servir de guide à des fils enduits 2 ou à des paquets de fils enduits 2. En référence à la figure 2, chaque orifice 5, 5' comporte un manchon 12 de guidage d'un fil 2 ou d'un paquet de fils 2, en l'espèce, d'un paquet de fils 2. Les manchons 12 sont en caoutchouc, pour remplir, outre une fonction de guidage, une double fonction, de protection des fils enduits 2 et de participation à la mise sous tension des fils 2 et à la maîtrise de cette tension, puisque le caoutchouc génère une force de frottement sur les fils 2.

En sortie du module de distribution 3, les fils enduits 2 se présentent sous la forme d'un faisceau annulaire 2' de fils enduits 2; la fonction du module de distribution est donc de former (et distribuer) un faisceau 2' de fils enduits 2; on parlera indifféremment d'un module de distribution 3 ou d'un module 3 de formation d'un faisceau 2' de fils enduits 2. Il s'agit, soit d'un faisceau 2' d'autant de fils enduits 2 que d'orifices 5, 5', dans le cas où un unique fil 2 est guidé par chaque orifice 5, 5', soit d'un faisceau 2' d'autant de paquets de fils enduits 2 que d'orifices 5, 5'. Le nombre de fils 2 est choisi pour que les fils 2 puissent couvrir l'ensemble de la surface développée de la pièce support 7. Dans la forme de réalisation décrite, pour une pièce support 7 de diamètre égal à 100mm, trente paquets de quarante fils 2 sont prévus; ainsi, les plaques 4, 4' comportent chacune trente orifices 5, 5', un paquet de quarante fils 2 passant dans chaque orifice 5, 5'.

Le dispositif 1 comporte une potence 8, mobile et entraînée en translation le long d'un axe 9 parallèle à l'axe A de la pièce support 7. La potence 8 supporte une filière 10, placée autour de la pièce support 7, d'axe A commun avec lui. La fonction de la filière 10, entraînée en translation, est d'enrouler les fils enduits 2 autour de la pièce support 7, qui est entraînée en rotation, afin de former un enroulement hélicoïdal des fils enduits 2 sur la pièce support 7. Dans la forme de réalisation décrite, la filière 10 est également entraînée en rotation autour de son axe A, par exemple grâce à un système de courroie ; cela permet une mise en place des fils 2 sur la pièce support 7 encore meilleure.

En référence à la figure 3, la filière 10 comporte, dans sa partie centrale, un passage cylindrique 11 a de diamètre D légèrement plus grand que le diamètre de la pièce support 7, afin de laisser le passage à la pièce support et aux fils enduits 2, qu'il guide et contraint légèrement sur la pièce support 7; de préférence, ce diamètre D est égal au diamètre de la pièce support plus 2,1 à 2,5 fois le diamètre d'un fil, dans le cas où une seule couche de fils est enroulée sur la pièce support 7. La portée P de ce passage 11a, c'est-à-dire, la longueur du passage 11a, est dimensionnée en fonction de la contrainte à laquelle on souhaite que les fils 2 soient soumis; de préférence, cette portée est comprise entre 20 et 30% du diamètre de la pièce support 7. En entrée de la filière 10, cette dernière comporte une portion évasée 11 b, ici tronconique, que l'on nommera portion d'introduction 11 b, dont l'angle a par rapport à l'axe A de la filière 10 est fonction du nombre de fils enduits 2 qui sont enroulés par la filière 10. En sortie de la filière 10, cette dernière comporte également une portion évasée 11 c, ici tronconique, dont la fonction principale est de relâcher les contraintes sur les fils enduits 2.

La fonction de la filière 10 est d'enrouler les fils enduits 2 sur la pièce support 7. Comme elle est déplacée en translation tandis que la pièce support est mise en rotation, elle force les fils 2 à être enroulés suivant une trajectoire hélicoïdale.

Le procédé de formation d'une pièce tubulaire avec un insert composite va maintenant être décrit plus en détails.

On forme des fils enduits 2, selon l'une des techniques connues, par exemple par un procédé d'enduction de fibres céramiques, au trempé, dans un bain de métal liquide. Ces fils 2 sont enroulés sur une bobine. Chaque fil 2 a par exemple un diamètre de 0,2 à 0,3 mm. Une pluralité de bobines, chacune avec un ou plusieurs fils enduit 2 enroulés à sa circonférence, sont disposés sur un module de bobines, non représenté. Ce module permet de placer les bobines de telle sorte qu'elles puissent être dévidées en direction du module de mise sous tension et du module de distribution 3, sans que les fils 2 ne se croisent.

Selon la forme de réalisation décrite, c'est un paquet de fils enduits 2 qui est enroulé sur chaque bobine. Autrement dit, une pluralité de fils enduits 2, mis en paquet, c'est-à-dire, juxtaposés les uns aux autres mais de manière non solidaire les uns des autres, sont enroulés ensemble sur chaque bobine. De telles bobines permettent la formation d'un faisceau de paquets de fils 2 puis l'enroulement de ces fils autour de la pièce support 7. L'homme du métier transposera aisément au cas où les fils d'un faisceau de fils individuels 2 sont enroulés autour de la pièce support 7.

Les paquets de fils enduits 2 sont dévidés vers le module de mise sous tension puis vers le module de distribution 3. Notons qu'avec un agencement adapté, le module de mise sous tension peut être intégré au module de bobines.

Chaque paquet de fils 2 est introduit dans un orifice 5 de la première plaque 4 du module de distribution 3, d'où il ressort vers un orifice 5' de la deuxième plaque 4' situé en face du premier orifice 5. Un faisceau annulaire 2' de paquets de fils 2 est ainsi formé.

Les paquets de fils 2 sont amenés jusqu'à la première extrémité 7a de la pièce support 7, c'est-à-dire, l'extrémité de la pièce support 7 située le plus loin du module de distribution 3. On bloque, ou on fixe, les fils à cette extrémité 7a; on fixe ici l'extrémité de ces fils 2, mais on pourrait fixer une partie des fils 2 qui n'en est pas l'extrémité. Cette fixation peut être obtenue d'une quelconque manière. En effet, comme on le verra plus loin, cette partie d'extrémité fixée des fils 2 sera subséquemment supprimée et ne fera pas partie de la pièce finale. Les fils 2 peuvent être fixés par soudage, brasage ou tout moyen de fixation mécanique. Selon une forme de réalisation particulière, les fils 2 ne sont d'ailleurs pas fixés sur l'extrémité 7a de la pièce support 7 mais à proximité de cette dernière, sur une autre pièce fixe. L'essentiel est que les fils 2 soient bloqués à proximité de l'extrémité de la pièce support 7, de manière à être enroulés convenablement sur elle. Notons également qu'on connaît, par la demande de brevet français déposée sous le numéro FR 05 51 406, un procédé de soudage de fils enduits par électrodes; un tel procédé peut être utilisé, soit uniquement pour la fixation des fils 2 à l'extrémité 7a de la pièce support 7, soit pour former une ligne de soudure sur les fils 2 le long de la pièce support 7, par exemple avec un dispositif de soudage par électrodes qui suit le mouvement en translation de la filière 10 ou qui suit une trajectoire hélicoïdale.

Une fois les fils bloqués à proximité de l'extrémité de la pièce support 7, la filière 10 est rapportée autour de la pièce support 7. La pièce support 7 est entraînée en rotation autour de son axe A, tandis que la filière 10 est entraînée en translation par la potence 8, et ici simultanément en rotation autour de l'axe A de la pièce support 7. De la sorte, les paquets de fils 2 du faisceau 2' sont enroulés, selon une trajectoire hélicoïdale, autour de la pièce support 7. Autrement dit, la filière 10 permet de torsader le faisceau 2' des paquets de fils 2 autour de la pièce support 7, c'est-à-dire d'enrouler les fils 2 tous ensemble autour de la pièce support 7, chaque fil se plaçant autour de la pièce support 7 individuellement puisqu'il n'est pas solidaire des autres. Les fils 2 se placent naturellement les uns à côté des autres pour recouvrir la pièce support 7. Grâce à la mise sous tension des fils 2, par la filière 10, le module de distribution 3, le module de mise sous tension et le module de bobines, les fils 2 restent plaqués en position sur la pièce support 7.

L'angle que font les fils enduits 2 avec l'axe A de la pièce support 7 est simplement déterminé par un rapport entre la vitesse de rotation de la pièce support 7 (et ici de la filière 10) et la vitesse de déplacement de la filière 10 en translation parallèlement à l'axe A de la pièce support 7. Cet angle est ici choisi égal à 45°.

Une fois les fils 2 enroulés sur la totalité de la pièce support 7, ils sont fixés à la deuxième extrémité 7b de la pièce support 7. De même que pour la première extrémité 7a, le mode de fixation n'est pas ici d'une grande importance et les mêmes modes de fixation sont envisageables.

La pièce support 7 est ainsi recouverte d'une couche de fils enduits 2 sur toute sa surface, en un seul passage de la filière 10; un tel procédé nécessite peu d'opérations et est aisé à mettre en oeuvre industriellement. Il est possible d'enrouler une ou plusieurs autres couches supplémentaires autour de la pièce support 7, selon le même procédé, en adaptant les dimensions des divers éléments.

Conformément à une forme de réalisation particulière, une pluralité de couches sont simultanément enroulées, soit avec une unique filière, soit avec des filières successives adaptées.

Dans les cas où plusieurs couches sont enroulées sur la pièce support 7, ces couches sont de préférence solidarisées entre couches adjacentes, par exemple par un procédé de soudage par électrode, auquel il est fait référence plus haut.

Une fois le nombre désiré de couches enroulées autour de la pièce support 7 atteint, la pièce principale est formée. A cet effet, l'ensemble est inséré dans un fourreau, de diamètre interne égal au diamètre externe de cet ensemble. Ce fourreau est constitué du même alliage métallique que l'enrobage des fibres des fils enduits 2, ici un alliage de Titane. L'ensemble est bouché à chacune de ses extrémités par des plaques métalliques circulaires, pour se présenter sous la forme d'un cylindre. Les plaques circulaires et le fourreau sont de préférence soudés par soudage par faisceau d'électrons, de manière à constituer un conteneur étanche ; ces plaques sont ici en alliage de Titane. Le soudage par faisceau d'électrons permet de faire préalablement le vide à l'intérieur du fourreau. L'ensemble formé est alors compacté de manière isostatique à chaud.

Lors de la compaction isostatique à chaud, qui se fait par exemple sous une pression de 1000 bar à 950°C, l'alliage de Titane est amené à diffuser et à créer la matrice métallique du matériau composite, au sein de laquelle s'étendent les fibres de céramique. L'alliage de Titane étant visqueux à haute température, il autorise un bon flux de diffusion de la matière, sans endommager les fibres de céramiques, lors de la formation de la matrice métallique. On obtient ainsi, dans le cas d'espèce considéré, un arbre, comportant une épaisseur interne d'alliage de Titane, correspondant à la pièce support 7, un insert central de matériau composite à matrice d'alliage de Titane, dans lequel s'étendent les fibres céramiques de manière hélicoïdale, et une épaisseur externe d'alliage de Titane, correspondant au fourreau.

Les extrémités de l'arbre, correspondant aux portions des fils 2 qui ont été fixées à la pièce support 7, sont alors usinées pour être chutées. L'arbre obtenu est donc homogène sur toute sa longueur, avec les fibres de céramiques formant un angle constant avec l'axe A de l'arbre. Selon une autre forme de réalisation, les portions correspondantes sont chutées avant l'ajout de plaques métalliques aux extrémités qui est opéré avant la compaction isostatique à chaud ; dans ce cas, il faut s'assurer du maintien des fils 2 en position sur la pièce support après que les extrémités ont été chutées; ce maintien peut être assuré, par exemple, par des lignes de soudure entre les fils 2 et la pièce support 7, notamment obtenues par soudage par électrode, auquel il est fait référence plus haut.

L'arbre obtenu présente l'avantage d'une très bonne résistance aux efforts, du fait de l'insert en matériau composite, qui autorise que l'épaisseur totale de sa paroi soit nettement inférieure à celle des arbres classiques. Cette faible épaisseur permet, outre un gain de masse considérable, un faible encombrement, utile dans les applications nécessitant la présence de nombreux arbres coaxiaux. L'arbre présente par ailleurs une très bonne résistance à la corrosion, puisque son constituant de base est ici un alliage de Titane, dont le comportement par rapport à la corrosion est bien meilleur que celui de l'acier, par exemple. Sans la présence des fibres céramiques, l'alliage de Titane seul n'aurait toutefois pas présenté une résistance suffisante aux efforts.

## Revendications

1. Procédé de fabrication d'une pièce tubulaire, comportant un insert en matériau composite à matrice métallique, au sein de laquelle s'étendent des fibres céramiques, le procédé comportant les étapes suivantes:
- la formation d'un faisceau (2') de fils préalablement enduits, chaque fil (2) comportant une fibre céramique enrobée d'une gaine métallique,
- la fixation des fils (2) du faisceau de fils (2') à proximité d'une extrémité d'une pièce support (7), et
- l'enroulement autour de la pièce support (7), selon une trajectoire hélicoïdale, de l'ensemble des fils du faisceau,
**caractérisé par le fait que** les fils (2) sont non solidaires les uns des autres et enroulés autour de la pièce support (7) par une filière (10), placée autour de la pièce support (7) et entraînée en translation le long de son axe (A), la pièce support (7) étant entraînée en rotation autour de son axe (A).

2. Procédé selon la revendication 1, dans lequel la filière (10) est également entraînée en rotation autour de l'axe (A) de la pièce support (7).

3. Dispositif de fabrication d'une pièce tubulaire, comportant un insert en matériau composite à matrice métallique, au sein de laquelle s'étendent des fibres céramiques, ledit dispositif comportant un module (3) de formation d'un faisceau (2') de fils préalablement enduits (2), chaque fil (2) comportant une fibre céramique enrobée d'une gaine métallique, des moyens de fixation des fils à proximité d'une extrémité d'une pièce support (7) et des moyens (10) d'enroulement, autour de la pièce support (7), selon une trajectoire hélicoïdale, de l'ensemble des fils du faisceau, **caractérisé par le fait que** le moyen d'enroulement comporte une filière (10) agencée pour être placée autour de la pièce support (7) et entraînée en translation le long de son axe (A), le dispositif étant agencé pour entraîner la pièce support (7) en rotation autour de son axe (A), ladite filière (10) comportant, dans sa partie centrale, un passage cylindrique (11a), dont la longueur est dimensionnée en fonction de la contrainte à laquelle sont soumis les fils, lesdits fils étant non solidaires les uns des autres.

4. Dispositif selon la revendication 3, dans lequel ladite longueur est comprise entre 20 et 30% du diamètre de ladite pièce support.

5. Dispositif selon l'une des revendications 3 ou 4, dans lequel ledit passage cylindrique est précédé par une portion d'introduction (11 b) du fil, de forme tronconique.

6. Dispositif selon l'une des revendications 3 à 5, dans lequel ledit passage cylindrique se prolonge, en sortie, par une portion évasée, de forme tronconique (11 c).

7. Dispositif selon l'une des revendications 3 à 6, dans lequel le module (3) de formation d'un faisceau (2') de fils enduits (2) comporte deux plaques (4, 4'), percées chacune d'une pluralité d'orifices (5, 5').

8. Dispositif selon la revendication 7, dans lequel chaque orifice (5, 5') comporte un manchon (12) de guidage des fils (2), agencé pour remplir une double fonction, de protection des fils (2) et de participation à la mise sous tension des fils (2).

9. Dispositif selon la revendication 8, dans lequel les manchons (12) sont en caoutchouc.

10. Dispositif selon l'une des revendications 3 à 9, dans lequel la filière (10) est agencée pour être également entraînée en rotation autour de l'axe (A) de la pièce support (7).

## Patentansprüche

1. Verfahren für die Herstellung eines rohrförmigen Teils, umfassend einen Einsatz aus Verbundmaterial mit Metallmatrix, in dessen Mitte sich Keramikfasern erstrecken, wobei das Verfahren die folgenden Schritte umfasst:
- das Bilden eines Bündels (2') aus vorab beschichteten Fäden, wobei jeder Faden (2) eine mit einem Metallmantel umgebene Keramikfaser umfasst,
- das Befestigen der Fäden (2) des Fadenbündels (2') in der Nähe eines Endes eines Trägerteils (7), und
- das Wickeln aller Fäden des Bündels um das Trägerteil (7) in einer schraubenförmigen Bahn,
**dadurch gekennzeichnet, dass** die Fäden (2) nicht miteinander verbunden sind und um das Trägerteil (7) durch einen Fadenführer (10) gewickelt werden, der um das Trägerteil (7) angeordnet ist und entlang seiner Achse (A) verschoben wird, wobei das Trägerteil (7) um seine Achse (A) in Drehung gebracht wird.

2. Verfahren nach Anspruch 1, wobei der Fadenführer (10) ebenfalls um die Achse (A) des Trägerteils (7) in Drehung gebracht wird.

3. Vorrichtung für die Herstellung eines rohrförmigen Teils, umfassend einen Einsatz aus Verbundmaterial mit Metallmatrix, in dessen Kern sich Keramikfasern erstrecken, wobei die Vorrichtung ein Modul (3) zur Bildung eines Bündels (2') von vorab beschichteten Fäden (2),
wobei jeder Faden (2) eine mit einem Metallmantel umgebene Keramikfaser umfasst, Mittel zur Befestigung der Fäden in der Nähe eines Endes eines Trägerteils (7) und Mittel (10) zum Wickeln aller Fäden des Bündels um das Trägerteil (7) in einer schraubenförmigen Bahn,
**dadurch gekennzeichnet, dass** das Mittel (10) zum Wickeln einen zum Anordnen um das Trägerteil (7) und entlang seiner Achse (A) ausgebildeten Fadenführer (7) umfasst, umfasst, wobei die Vorrichtung zum Versetzen des Trägerteils (7) in Drehung um seine Achse (A) ausgebildet ist, wobei der Fadenführer (10) im Mittelteil eine zylindrische Durchführung (11a) umfasst, deren Länge entsprechend der Belastung, der die Fäden ausgesetzt sind, bemessen ist, wobei die Fäden nicht miteinander verbunden sind.

4. Vorrichtung nach Anspruch 3, wobei die Länge zwischen 20 und 30 % des Durchmessers des Trägerteils beträgt.

5. Vorrichtung nach einem der Ansprüche 3 oder 4, wobei vor der zylindrischen Durchführung ein Teil zum Einführen (11b) des Fadens in kegelstumpfartiger Form angeordnet ist.

6. Vorrichtung nach einem der Ansprüche 3 bis 5, wobei sich die zylindrische Durchführung am Auslauf durch einen konisch erweiterten Teil in kegelstumpfartiger Form (11c) verlängert.

7. Vorrichtung nach einem der Ansprüche 3 bis 6, wobei das Modul (3) zur Bildung eines Bündels (2') von beschichteten Fäden (2) zwei Platten (4, 4') umfasst, die jeweils mit einer Vielzahl von Öffnungen (5, 5') durchlöchert sind.

8. Vorrichtung nach Anspruch 7, wobei jede Öffnung (5, 5') eine Hülse (12) zum Führen der Fäden (2) umfasst, die zum Erfüllen einer doppelten Funktion zum Schutz der Fäden (2) und zum Unterstützen des Spannens der Fäden (2) ausgebildet ist.

9. Vorrichtung nach Anspruch 8, wobei die Hülsen (12) aus Kautschuk sind.

10. Vorrichtung nach einem der Ansprüche 3 bis 9, wobei der Fadenführer (10) ebenfalls ausgebildet ist, in Drehung um die Achse (A) des Trägerteils (7) versetzt zu werden.

## Claims

1. Method for manufacturing a tubular part, comprising an insert made from composite material with a metal matrix, in which ceramic fibres lie, the method comprising the following steps:
- the formation of a cluster (2') of previously coated threads, each thread (2) comprising a ceramic fibre clad with a metal sheath,
- the fixing of the threads (2) of the cluster of threads (2') close to one end of a support piece (7), and
- the winding around the support piece (7), on a helical path, of all the threads in the cluster,
**characterised by** the fact that the threads (2) are not secured to one another and are wound around the support piece (7) by a die (10), placed around the support piece (7) and translated along its axis (A), the support piece (7) being rotated about its axis (A).

2. Method according to claim 1, in which the die (10) is also rotated about the axis (A) of the support piece (7).

3. Device for manufacturing a tubular part, comprising an insert made from composite material with a metal matrix, in which ceramic fibres lie, said device comprising a module (3) for forming a cluster (2') of previously coated threads (2), each thread (2) comprising a ceramic fibre clad in a metal sheath, means for fixing the threads close to one end of a support piece (7) and means (10) for winding, around the support piece (7), on a helical path, all the threads in the cluster, **characterised by** the fact that the winding means comprises a die (10) arranged so as to be placed around the support piece (7) and translated along its axis (A), the device being arranged so as to rotate the support piece (7) about its axis (A), said die (10) comprising, in its central part, a cylindrical passage (11a), the length of which is sized according to the stress to which the threads are subjected, said threads not being secured to one another.

4. Device according to claim 3, in which said length is between 20% and 30% of the diameter of said support piece.

5. Device according to one of claims 3 or 4, in which said cylindrical passage is preceded by a portion (11b) for introducing the thread, frustoconical in shape.

6. Device according to one of claims 3 to 5, in which said cylindrical passage is extended, at its outlet, by a splayed portion, frustoconical in shape (11c).

7. Device according to one of claims 3 to 6, in which the module (3) for forming a cluster (2') of coated threads (2) comprises two plates (4, 4'), each pierced with a plurality of orifices (5, 5').

8. Device according to claim 7, in which each orifice (5, 5') comprises a sleeve (12) for guiding the threads (2), arranged so as to fulfil a dual function, for protecting the threads (2) and for participating in the tensioning of the threads (2).

9. Device according to claim 8, in which the sleeves (12) are made from rubber.

10. Device according to one of claims 3 to 9, in which the die (10) is arranged so as also to be rotated about the axis (A) of the support piece (7).
